# EUROPEAN PATENT SPECIFICATION

(11) **EP 2 485 865 B1**
(45) Date of publication and mention of the grant of the patent: **11.09.2013**
(21) Application number: 10760711.1
(22) Date of filing: 05.10.2010
(51) Int. Cl.: B23Q 1/38, B23Q 11/00, F16C 32/06

(54) **PART HOLDER FOR MACHINE TOOL WITH PRELOADING OF A HYDROSTATIC SUPPORTING BEARING**
WERKSTÜCKHALTER FÜR WERKZEUGMASCHINE MIT VORSPANNUNG EINES HYDROSTATISCHEN LAGERS
PORTE-PIÈCE POUR MACHINE-OUTIL AVEC PRÉCHARGE D'UN PALIER HYDROSTATIQUE

(30) Priority: 05.10.2009 IT PD20090289
(43) Date of publication of application: 15.08.2012
(73) Proprietor: Hpt Sinergy S.r.l., 35131 Padova (IT)
(72) Inventor: GUELI, Francesco, I-35030 Selvazzano Dentro (IT)
(74) Representative: Modiano, Micaela Nadia
(86) International application number: PCT/EP2010/064831
(87) International publication number: WO 2011/042438

(56) References cited:
- DE-A1- 2 255 627
- US-A- 3 871 721

## Description

### Technical field

The present invention relates to a part holder for parts to be machined with machine tools, particularly for parts having a large mass to be machined in vertical lathes (see, for example, US-3,871,721).

### Background Art

Nowadays, in the field of machine tools for machining parts having a large mass, for example even over 100 tonnes, vertical lathes provided with a part holder are known which comprise rotating tables, provided with supporting fifth wheels with rolling bearings, i.e. roller bearings or ball race bearings, or hydrostatic bearings.

A very pressing requirement in the field of these machines consists in ensuring a rigidity of the part holder, which makes it possible to prevent dynamic instabilities thereof when machining the parts, as the mass of the part to be machined changes.

Indeed, a requirement of the user of such lathes is to be able to use them for machining parts whose weight can vary from a few tonnes to 120 tonnes and more.

On the other hand, nowadays the design philosophy followed for dimensioning the support devices in use today provide for the optimisation of the dynamic behaviour for a chosen load.

The dynamic behaviour of the devices designed in this way is therefore optimum for parts having weight that is equal to or nearly equal to the design load, while exhibiting a decrease in performance levels that is proportional to the difference in the weight of the part from that of the design load.

Fifth wheels with hydrostatic support bearings are today particularly appreciated because, for the same design conditions, compared to rolling bearings currently in use they do not have startup vacillations, which are due to the crushing of the rollers and of the balls, and they exhibit less absorption of power in the form of dynamic friction, and so exhibiting lower operating temperatures as well, all to the advantage of the dimensional stability of the parts that are sensitive to thermal dilatation effects.

However, according to the design techniques indicated, the use of hydrostatic bearings is particularly unsuitable for supporting the worktable-supporting fifth wheel in use in support devices upon which parts that vary greatly in weight are deployed.

Indeed, as is known, the optimum operation of hydrostatic bearings is identified by a gap thickness and fluid pressure which are dependent on the dimensioning choices.

Therefore, a decrease in the load of such bearings, owing to the machining of a part having a lower weight than that of the design load, induces a reduction in the fluid pressure and an increase in the gap, which correspond to a rigidity configuration that is lower than that of the optimum operation and to a higher flow of fluid which the hydraulic system has to handle.

Vice versa, overloading the hydrostatic bearing, with respect to the optimum load, induces an increase in rigidity which is correlated to the increase in fluid pressure and to the reduction in the gap.

In particular, the reduction in the gap is a critical operating effect, in that, with the reduction in the operating gap, the probability of mutual contact of the hydrostatic sliders that make up the bearing increases.

If such contact actually occurs, the damage to the fifth wheel is always extensive, whether it induces a sudden increase in the operating temperature, or, at worst, it causes the sliders to seize.

So today, the use of hydrostatic fifth wheels, however appreciated they may be, tends to be relatively limited to machines which have a device for compensating the operating load.

Compensation devices which are known today, which are used both in support devices with hydrostatic fifth wheels and in support devices with fifth wheels with rolling bearings, are adapted to determine a minimum operating load of the fifth wheel that supports, the worktable, or to cooperate with the fifth wheel in supporting the part, so limiting the maximum load weighing down on it.

The most advanced compensation devices known today generally have hydraulic pistons on a preloading fifth wheel connected to the part-holder worktable.

Such hydraulic pistons act
- in agreement with the weight of the part, in order to determine a gradual preloading on the load-bearing fifth wheel, or
- in disagreement with the weight of the part, in order to gradually share its support with the load-bearing fifth wheel, as the weight of the part to be supported increases.

In effect, therefore, such compensating devices have an action on the load-bearing fifth wheel which is gradual in nature, pre-loading it or unloading it according to a pre-established proportionality to the weight to be supported.

In this way, such devices extend the range of optimum operation of the part holder from one optimum load value to an interval of loads, acting on the bearings, which is equal to the interval of weights of the part for which they are adapted to compensate.

Therefore, although they are much appreciated today, such compensating devices are however only capable of widening the field of optimum operation of the supporting devices on which they are fitted, which means that there is still a pressing need for supporting devices that can maintain an optimum rigidity by automatically adapting to the weight of the piece being machined, even if this should vary during the machining operation itself.

### Disclosure of the Invention

The aim of the present invention is to meet this requirement, by devising a part holder that, in use, is in conditions of optimum operation substantially regardless of the weight of the part to be machined which it supports.

Within this aim, an object of the invention is to provide a part holder that makes it possible to automatically modulate its configuration, as a function of the weight of the part that it supports, while maintaining its rigidity in conditions of optimum operation.

Another object of the invention is to devise a part holder that makes it possible to automatically modulate its configuration while maintaining its rigidity in conditions of optimum operation even in the event of variations of loads which can be ascribed to heat expansions which arise during the machining of the part that it is supporting.

Another object of the invention is to provide a part holder that makes it possible to automatically modulate its configuration even during the machining of the part that it is supporting.

Another object of the invention is to devise a part holder that is structurally simple and easy to use.

This aim, as well as these and other objects which will become better apparent hereinafter, are achieved by a part holder for parts to be machined with machine tools, particularly for parts having a large mass to be machined in vertical lathes, characterized in that it comprises
- a worktable for supporting the part,
- a footing for supporting said worktable,
- at least one hydrostatic supporting bearing, adapted to support said worktable on said footing,
- at least one preloading bearing, which is interposed between said worktable and said footing, in a dynamic parallel configuration with respect to said at least one supporting bearing,
- means for modulating a preloading imparted to said at least one supporting bearing,
- means for sensing at least one functional parameter of at least one chosen supporting slider of said at least one supporting bearing, and
- a central unit for controlling said modulation means,
said central control unit being functionally connected to said sensing means so as to receive from them estimates of said at least one functional parameter, said central control unit being further functionally connected to said modulation means so as to drive them as a function of said estimates.

### Brief description of the drawings

Further characteristics and advantages of the invention will become better apparent from the following detailed description of a preferred, but not exclusive, embodiment of the part holder according to the invention, illustrated by way of non-limiting example in the accompanying drawings, wherein:

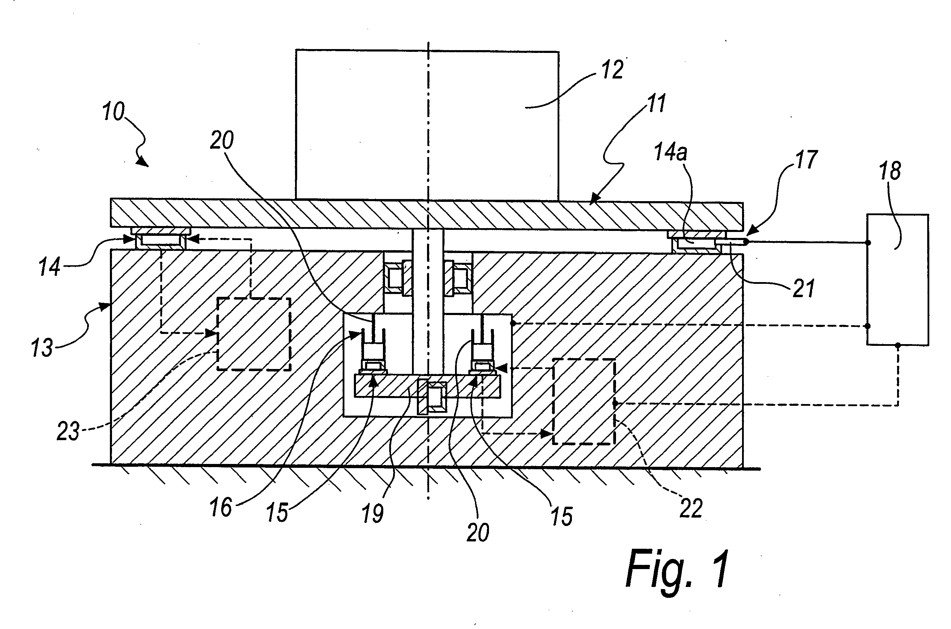

Figure 1 shows a simplified diagram of a part holder according to the invention;
Figure 2a shows a chart of the general trend of the pressure as a function of the height of the gap in a hydrostatic bearing;
Figure 2b shows a simplified general diagram of a hydrostatic bearing;
Figure 3 shows a flowchart of the functioning of a part holder, according to the invention.

### Ways of carrying out the Invention

It should be noted that everything found to be already known during the patenting procedure is not intended to be claimed and is intended to be removed from the claims.

With reference to the figures, the reference numeral 10 generally indicates a part holder for parts to be machined with machine tools, particularly for parts having a large mass to be machined in vertical lathes, which comprises
- a worktable 11 for supporting a part 12,
- a footing 13 for supporting the worktable 11,
- a hydrostatic supporting bearing 14 which is adapted to support the worktable 11 on the footing 13,
- a preloading bearing 15, which is interposed between the worktable 11 and the footing 13, in a dynamic parallel configuration with respect to the supporting bearing 14,
- means 16 for modulating a preloading imparted to the supporting bearing 14, advisably by means of the preloading bearing 15,
- means 17 for sensing a functional parameter A of a chosen supporting slider 14a of the supporting bearing 14, and
- a central unit 18 for controlling the modulation means 16.

The central control unit 18 is functionally connected to the sensing means 17 so as to receive from them estimates of the functional parameter A, the central control unit 18 being further functionally connected to the modulation means 16 so as to drive them as a function of such estimates.

It is noted that, by the term hydrostatic bearing, or hydrostatic support bearing, what is meant here is a bearing which is made up of a race of hydrostatic sliders.

Advisably, in alternative embodiments of the part holder according to the invention, the part holder can comprise more than one supporting bearing and more than one preloading bearing, and furthermore, according to the contingent requirements, more than one functional parameter can be sensed by the sensing means, and possibly for more than one chosen supporting slider.

The worktable 11 advantageously comprises a support 19, advisably annular, which is adapted to support the preloading bearing 15.

The modulation means 16 conveniently comprise pistons 20 for pushing on the preloading bearing 15.

The pistons 20 conveniently are functionally connected to the control unit 18 in order to be driven by it in setting the preloading thrust imparted to the supporting bearing 14, advisably by means of the preloading bearing 15.

More specifically, the sensing means 17 preferably comprise a pressure transducer 21 which is connected to the chosen supporting slider 14a, the pressure transducer 21 being adapted to estimate a flow pressure P₁.

By the term flow pressure P₁, what is meant here is the operation pressure of the chosen supporting slider 14a.

Therefore, conveniently, the functional parameter A is the flow pressure P₁.

In general, according to the implementation requirements of a part holder 10 according to the invention, the preloading bearing 15 can be with roller bearings, but preferably it is with hydrostatic support.

Advantageously, the part holder 10 also comprises a supply system 22, for the hydraulic supply of the preloading bearing 15 to a pressure P₀.

The control unit 18, advisably, is functionally connected to the supply system 22 so as to drive the supply pressure of the preloading bearing 15 in tune with the simultaneous driving of the pistons 20.

In this way the control unit 18 can perform the function of simultaneously driving the pistons 20 and the supply system 22 in order to compensate any variations in the load supported by the supporting bearing 14, if this load should tend to alter its operating condition thus distancing it from the condition of optimum operation.

In particular, the control unit 18, advantageously, comprises first calculation means which are adapted to calculate a variation of the preloading force dFₚ, to be applied to the supporting bearing 14 by means of the pistons 20, in order to compensate a variation in the load supported by it.

The variation of the preloading force dFₚ is equal to the product of a first virtual area A_{vI} and the difference between an optimum flow pressure Pₒₜₜ and the flow pressure P₁ sensed by the pressure transducer 21, i.e. in formula dFₚ=Aᵥ₁·(Pₒₜₜ-P₁).

The first virtual area Aᵥ₁ is here understood to be the virtual area of the supporting bearing 14, and the optimum flow pressure Pₒₜₜ is the operating pressure of the supporting bearing 14 in the optimum functional condition.

As is known, this pressure condition corresponds to an optimum gap height h₀, of the supporting bearing 14.

As described in more detail hereinafter, therefore, in order to maintain the optimum functional condition of the supporting bearing 14, the part holder 10 adapts its configuration so that the gap height of the supporting bearing is equal to the optimum gap height h₀, its operating pressure being equal to the optimum flow pressure Pₒₜₜ.

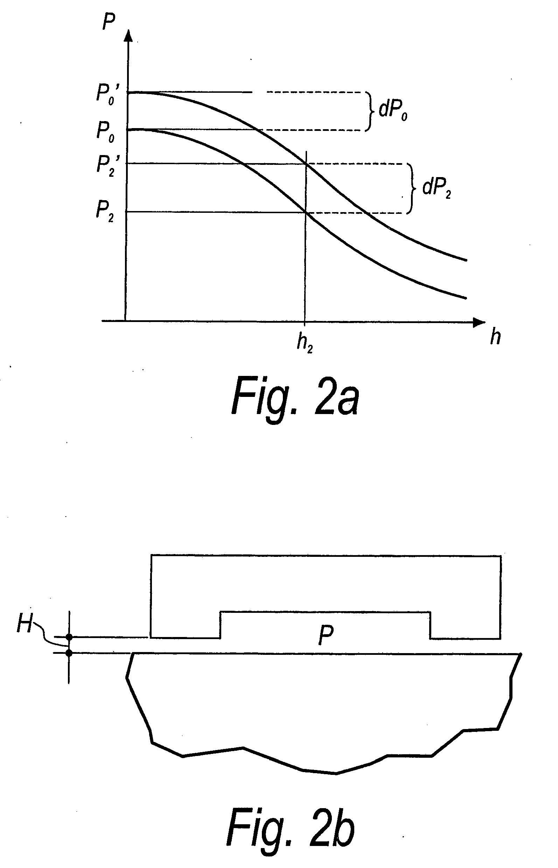

With particular reference to Figures 2a and 2b, by the term optimum functional condition, what is meant here is that functional condition of a hydrostatic bearing, identified by a pair of values of pressure P and of gap height h, which corresponds to the condition of maximum rigidity of the bearing.

As is known, such condition can generally be identified in a h-P diagram from those values of h and P which correspond to the point where the P(h) curve flexes, which corresponds to the condition of maximum rigidity of the hydrostatic bearing.

For example, in the diagram h-P shown in Figure 2a, such optimum functional condition can therefore be identified at the point of coordinates (h2, P2).

Moreover, the control unit 18 advisably also comprises second calculation means, which are adapted to calculate a variation of the pressure of the pistons dPₚ, which is equal to the ratio that is the result of the division of the variation of the preloading force dFₚ by the area of the crown of the pistons Aₚ, in formula dPₚ=dFₚ/A_{p.}

The variation of the pressure of the pistons dPₚ is the variation in the operating pressure of the pistons 20 which is adapted to impart the variation of the preloading force dFₚ to the supporting bearing 14.

Moreover, the control unit 18 advantageously comprises third calculation means, which are adapted to calculate a preloading pressure variation dP₂, which is equal to the ratio that is the result of the division of the preloading force variation dFₚ by a second virtual area Aᵥ₂, in formula dP₂=dFₚ/Aᵥ₂, the second virtual area Aᵥ₂ being the virtual area of the preloading bearing 15 and the preloading pressure variation dP₂ being the operating pressure variation of the preloading bearing 15.

At the same time, the control unit 18 similarly and preferably comprises
- first driving means, which are connected to the pistons 20 so as to drive them, imparting to them a variation in operating pressure that is equal to the pressure variation of the pistons dPₚ, and
- second driving means, which are connected to the supply system 22 so as to drive it, imparting a supply pressure variation dP₀ to the supply pressure P₀ such as to keep constant the gap height h of the preloading bearing 15 as a consequence of the preloading pressure variation dP₂.

Conveniently, such calculation means are integrated in a PLC, which is the acronym of the English expression "programmable logic controller", connected to such driving means.

More specifically, the second driving means advisably comprise at least one pressure servo-regulator which is interposed between the supply system 22 and the preloading bearing 15 so as to impart the supply pressure variation dP₀ which makes it possible to keep the gap height h of the preloading bearing 15 constant, to counteract the variation of the preloading pressure dP₂.

In this way, on command from such PLC, such pressure servo-regulator can impart the variation in the supply pressure dP₀, of the preloading bearing 15 supplied by the supply system 22, so as to keep its gap height h constant to counteract the variation of the preloading pressure dP₂.

Moreover, generally, such calculation means and such driving means work according to a closed-loop cycle, determining cyclically and automatically
- a verification of the functional configuration of the supporting bearing 14,
- a reconfiguration of the part holder 10 when the verification ascertains a variation of the functional configuration of the supporting bearing 14 with respect to the functional configuration for optimum operation.

Alternatively, according to the contingent requirements, such calculation means and such driving means operate according to an open cycle.

The operation, according to the invention, is as follows.

During the loading of a part 12 onto the worktable 11, or the unloading from the worktable 11 of the part 12, or during the machining of a part 12 which involves a reduction of its mass, the load supported by the supporting bearing 14 changes.

This change is manifested as a variation in the flow pressure P₁, which is detected by the pressure transducer 21, in the chosen supporting slider 14a.

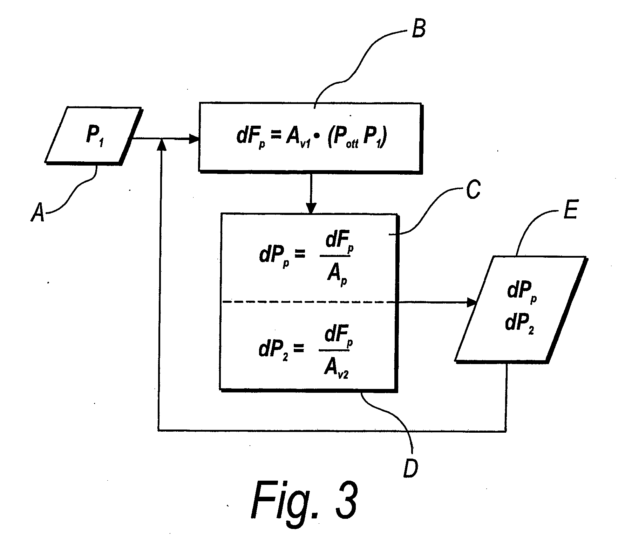

Therefore, with particular reference to Figure 3, the functional parameter A, which advisably is the value of the flow pressure P₁, is calculated by such first calculation means which perform a first calculation operation B, which consists in calculating the variation of the preloading force dFₚ=Aᵥ₁·(Pₒₜₜ-P₁).

Therefore, such second calculation means perform a second calculation operation C which consists in calculating the pressure variation of the pistons dPₚ=dFₚ/Aₚ, and such third calculation means perform a third calculation operation D which consists in calculating the preloading pressure variation dP₂=dFₚ/Aᵥ₂.

There follows a transmission operation E of the values of the variation in pressure of the pistons dPₚ to such first driving means, and of the variation of the preloading pressure dP₂ to such second driving means.

Therefore, the control unit 18 again receives the functional parameter A which is equal to the value of the updated flow pressure P₁, detected by the pressure transducer 21, and the operations B, C, D and E are repeated cyclically.

Such driving means, therefore, modify
- the pressure of the pistons Pₚ by the value of the pressure variation of the pistons dPₚ received, and
- the supply pressure P₀ by the value of the supply pressure variation dP₀, in order to keep the gap height h constant to counteract the variation of the preloading pressure dP₂ received.

In this way, when a variation occurs in the load supported by the supporting bearing 14, the part holder 10 automatically reacts by modulating the preloading force Fₚ which acts upon it, in order to keep it in a condition of optimum operation.

With particular reference to Figures 2a and 2b, Figure 2a shows, for the purposes of non-limiting example, an operational condition of the preloading bearing 15, identified by the point at coordinates (h₂, P₂) where the flow pressure P₂ corresponds to a gap height h which is equal to h₂.

Now, if the load acting on the supporting bearing 14 for example decreases, as in the case of a decrease in the mass of the part owing to a removal of shavings, according to the foregoing description the control unit 18 reacts by imparting a variation of the supply pressure dP₀ which is such as to keep the gap height h constant, i.e. equal to h₂, to counteract the variation of the preloading pressure dP₂.

In this way, the conditions of optimum operation of the supporting bearing 14 are maintained.

Indeed, the increase in the preloading force Fₚ corresponds to an increase in the flow pressure P₂ which rises to an adaptation flow pressure value P₂'=P₂+dP₂.

To keep the gap height h constant, equal to h₂, the supply pressure P₀ is therefore increased to an adaptation supply pressure value P₀'.

The supporting bearing 14 is supplied by a supply circuit 23, which is adapted to determine its conditions of optimum operation which can be identified from an operating pressure which is equal to the optimum flow pressure Pₒₜₜ that corresponds to a gap height which is equal to an optimum gap height h₀.

Therefore, by means of the pressure servo-regulator, the control unit 18 modulates the supply pressure P₀ of the preloading bearing 15 so as to keep the gap height h of its sliders constant.

Moreover, an important functionality that a part holder 10 according to the invention is capable of offering is that of weighing the part 12 placed on the worktable 11. Since the weight force of the worktable Mₜ is known, then the weight force of the part Mₚ is equal to the difference resulting from the subtraction
- from the product of the first virtual area Aᵥ₁ and the flow pressure P₁, detected by the pressure transducer 21,
- of the sum of the weight of the worktable Mₜ added to the preloading force Fₚ=Pₚ·Aₚ,
   i.e. in formula Mₚ=Aᵥ₁·P₁-(Mₜ+Fₚ).

In this way, by means of a part holder 10 according to the invention, it is possible to rapidly find out the actual weight of the part 12 which it is supporting, by programming such PLC in order to provide this item of data to the operator.

Moreover, it should be noted that, in conditions of correct operation of a part holder 10 according to the invention, the part 12 must be balanced on the worktable 11, i.e., advisably by means of the use of counterweights, it must present its centre of gravity axis as coinciding with the machining axis, which is the axis of rotation of the worktable 11.

In practice it has been found that the invention fully achieves the intended aim and objects by devising a part holder that, in use, is rigid in conditions of optimum operation substantially regardless of the weight of the part to be machined which it supports, owing to the automatic adaptation that it performs.

Moreover a part holder according to the invention makes it possible to automatically modulate its configuration, as a function of the weight of the part that it supports, while maintaining its rigidity in conditions of optimum operation even in the event of variations of loads which can be ascribed to removal of shavings during the machining of the part that it is supporting.

Moreover, a part holder according to the invention makes it possible to automatically modulate its configuration during the machining of the piece that it is supporting, and is further structurally simple and easy to use.

## Claims

1. A part holder for parts to be machined with machine tools, particularly for parts having a large mass to be machined in vertical lathes, comprising:
- a worktable (11) for supporting a part (12),
- a footing (13) for supporting said worktable (11),
- at least one hydrostatic supporting bearing (14) adapted to support said worktable (11) on said footing (13),
- at least one preloading bearing (15), which is interposed between said worktable (11) and said footing (13), in a dynamic parallel configuration with respect to said at least one supporting bearing (14),
and **characterized by**
- means (16) for modulating a preloading imparted to said at least one supporting bearing (14),
- means (17) for sensing at least one functional parameter (A) of at least one chosen supporting slider (14a) of said at least one supporting bearing (14), and
- a central unit (18) for controlling said modulation means (16),
said central control unit (18) being functionally connected to said sensing means (17) so as to receive from them estimates of said at least one functional parameter (A), said central control unit (18) being further functionally connected to said modulation means (16) so as to drive them as a function of said estimates.

2. The part holder according to claim 1, **characterized in that** said worktable (11) comprises a support (19) for said at least one preloading bearing (15), said modulation means (16) comprising pistons (20) for pushing against said at least one preloading bearing (15), said pistons (20) being functionally connected to said central control unit (18) in order to be driven by it in setting the preloading thrust imparted to said at least one supporting bearing (14) by means of said at least one preloading bearing (15).

3. The part holder according to one of the preceding claims, **characterized in that** said sensing means (17) comprise at least one pressure transducer (21), which is connected to said at least one chosen supporting slider (14a), said pressure transducer (21) being adapted to estimate a flow pressure (P₁), said flow pressure (P₁) being the operating pressure of said at least one chosen supporting slider (14a), said at least one functional parameter being said flow pressure (P₁).

4. The part holder according to one of the preceding claims, **characterized in that** said at least one preloading bearing (15) is of the hydrostatic support type.

5. The part holder according to claim 4, **characterized in that** it comprises a supply system (22), which is adapted for the hydraulic supply of said at least one preloading bearing (15) at a pressure P₀, , said central control unit (18) being functionally connected to said supply system (22) so as to drive the supply pressure (P₀) of said at least one preloading bearing (15), in tune with the simultaneous driving of said pistons (20).

6. The part holder according to one of the preceding claims, **characterized in that** said central control unit (18) comprises
- first calculation means, which are adapted to calculate a variation of preloading force (dFₚ), to be applied to said at least one supporting bearing (14) by means of said pistons (20), said preloading force variation (dFₚ) being equal to the product of a first virtual area (Aᵥ₁) and the difference between an optimum flow pressure (Pₒₜₜ) and said flow pressure (P₁), i.e., in formulas dFₚ=Aᵥ₁·(Pₒₜₜ-P₁), said first virtual area (Aᵥ₁) being the virtual area of said at least one supporting bearing (14) and said optimum flow pressure (Pₒₜₜ) being the operating pressure of said at least one supporting bearing (14) in the optimum functional condition,
- second calculation means, which are adapted to calculate a variation of the pressure of the pistons (dPₚ), which is equal to the ratio that is the result of the division of said variation of the preloading force (dFₚ) by the area of the crown of the pistons (Aₚ), in formula dPₚ=dFₚ/Aₚ, said piston pressure variation (dPₚ) being the operating pressure variation of said pistons (20) that is adapted to impart to said at least one supporting bearing (14) said preloading force variation (dFₚ),
- third calculation means, which are adapted to calculate a preloading pressure variation (dP₂), which is equal to the ratio that is the result of the division of said preloading force variation (dFₚ) by a second virtual area (Aᵥ₂), in formula dP₂=dFₚ/Aᵥ₂, said second virtual area (Aᵥ₂) being the virtual area of said at least one preloading bearing (15) and said preloading pressure variation (dP₂) being the operating pressure variation of said at least one preloading bearing (15),
- first driving means, which are connected to said pistons (20) so as to drive them, imparting to them a variation in operating pressure that is equal to said pressure variation of the pistons (dPₚ),
- second driving means, which are connected to the supply system (22) so as to drive it, imparting a supply pressure variation (dP₀) to the supply pressure (P₀) such as to keep constant the gap height (h) of said at least one preloading bearing (15) as a consequence of said preloading pressure variation (dP₂).

7. The part holder according to one of the preceding claims, **characterized in that** said second driving means comprise at least one pressure servo-regulator which is interposed between said supply system (22) and said at least one preloading bearing (15), so as to impart said supply pressure variation (dP₀) of said at least one preloading bearing (15), supplied by said supply system (22), so as to keep constant said gap height (h) following said preloading pressure variation (dP₂).

8. The part holder according to claim 7, **characterized in that** said calculation means and said driving means work according to a closed-loop cycle, determining cyclically and automatically
- a verification of the functional configuration of said at least one supporting bearing (14),
- a reconfiguration of said part holder (10) when the verification ascertains a variation of the functional configuration of said supporting bearing (14) with respect to the functional configuration for optimum operation.

9. The part holder according to one of the preceding claims, **characterized in that** said calculation means are integrated in a PLC connected to said driving means.

## Patentansprüche

1. Ein Teilehalter für Teile, die mit Werkzeugmaschinen zu bearbeiten sind, insbesondere für Teile mit großer Masse, die in vertikalen Drehbänken zu bearbeiten sind, Folgendes umfassend:
- einen Werktisch (11) zum Tragen eines Teils (12),
- einen Fuß (13) zum Tragen des Werktischs (11),
- mindestens ein hydrostatisches Traglager (14), das ausgebildet ist, um den Werktisch (11) auf dem Fuß (13) zu tragen,
- mindestens ein Vorbelastung-Lager (15), das zwischen dem Werktisch (11) und dem Fuß (13), in einer dynamischen parallelen Anordnung im Verhältnis zu dem mindestens einen Traglager (14), angeordnet ist,
und **gekennzeichnet durch** Mittel (16) zum Modulieren einer Vorbelastung, die auf das mindestens eine Traglager (14) ausgeübt wird,
- Mittel (17) zur Erfassung mindestens eines Funktionsparameters (A) mindestens eines ausgewählten Stützschiebers (14a) des mindestens einen Traglagers (14), und
- eine Zentraleinheit (18) zur Steuerung der Modulationsmittel (16),
wobei die zentrale Steuereinheit (18) funktionell mit den Erfassungsmitteln (17) verbunden ist, um von ihnen Schätzungen des mindestens einen Funktionsparameters (A) zu erhalten, wobei die zentrale Steuereinheit (18) weiter funktionell mit den Modulationsmitteln (16) verbunden ist, um sie als eine Funktion der Schätzwerte anzutreiben.

2. Der Teilehalter gemäß Anspruch 1, **dadurch gekennzeichnet, dass** der Werktisch (11) einen Träger (19) für das mindestens eine Vorbelastung-Lager (15) umfasst, wobei die Modulationsmittel (16) Kolben (20) zum Schieben gegen das mindestens eine Vorbelastung-Lager (15) umfassen und die Kolben (20) funktionell mit der zentralen Steuereinheit (18) verbunden sind, um von ihr angetrieben zu werden beim Einstellen des Vorbelastungsschubs, der auf das mindestens eine Traglager (14) mit Hilfe des mindestens einen Vorbelastung-Lagers (15) ausgeübt wird.

3. Der Teilehalter gemäß einem der obigen Ansprüche, **dadurch gekennzeichnet, dass** die Erfassungsmittel (17) mindestens einen Druckgeber (21) umfassen, der mit dem mindestens einen ausgewählten Stützschieber (14a) verbunden ist, wobei der Druckgeber (21) ausgebildet ist, um einen Fließdruck (P₁) zu schätzen, wobei der Fließdruck (P₁) der Betriebsdruck des mindestens einen ausgewählten Stützschiebers (14a) ist, wobei der mindestens eine Funktionsparameter der Fließdruck (P₁) ist.

4. Der Teilehalter gemäß einem der obigen Ansprüche, **dadurch gekennzeichnet, dass** das mindestens eine Vorbelastung-Lager (15) vom hydrostatischen tragenden Typ ist.

5. Der Teilehalter gemäß Anspruch 4, **dadurch gekennzeichnet, dass** er ein Versorgungssystem (22) umfasst, das ausgebildet ist für die hydraulische Versorgung des mindestens einen Vorbelastung-Lagers (15) mit einem Druck P₀, wobei die zentrale Steuereinheit (18) funktionell mit dem Versorgungssystem (22) verbunden ist, um den Versorgungsdruck (P₀) des mindestens einen Vorbelastung-Lagers (15) gemeinsam mit dem gleichzeitigen Antrieb der Kolben (20) anzutreiben.

6. Der Teilehalter gemäß einem der obigen Ansprüche, **dadurch gekennzeichnet, dass** die zentrale Steuereinheit (18) Folgendes umfasst:
- erste Berechnungsmittel, die ausgebildet sind, um eine Schwankung einer Vorbelastungskraft (dFₚ) zu berechnen, die mit Hilfe der Kolben (20) auf das mindestens eine Traglager (14) ausgeübt werden soll, wobei die Schwankung (dFₚ) der Vorbelastungskraft gleich dem Produkt aus einer ersten virtuellen Fläche (Aᵥ₁) und der Differenz zwischen einem optimalen Fließdruck (Pₒₜₜ) und dem Fließdruck (P₁) ist, d. h. in Formeln dFₚ = Aᵥ₁·(Pₒₜₜ-P₁), wobei die erste virtuelle Fläche (Aᵥ₁) die virtuelle Fläche des mindestens einen Traglagers (14) ist und der optimale Fließdruck (Pₒₜₜ) der Betriebsdruck des mindestens einen Traglagers (14) unter der optimalen Funktionsbedingung ist,
- zweite Berechnungsmittel, die ausgebildet sind, um eine Schwankung (dPₚ) des Kolbendrucks zu berechnen, die gleich dem Quotienten ist, der das Ergebnis der Division der Schwankung (dFₚ) der Vorbelastungskraft durch die Fläche (Ap) des Kolbenbodens ist, in einer Formel dPₚ = dFₚ/Aₚ, wobei die Kolbendruckschwankung (dPₚ) die Betriebsdrucksschwankung der Kolben (20) ist, die ausgebildet ist, um dem mindestens einen Traglager (14) die Schwankung (dFₚ) der Vorbelastungskraft zuzuführen,
- dritte Berechnungsmittel, die ausgebildet sind, um eine Vorbelastungsdruckschwankung (dP₂) zu berechnen, die gleich dem Quotienten ist, der das Ergebnis der Division der Vorbelastungs-kraftschwankung (dFₚ) durch eine zweite virtuelle Fläche (Aᵥ₂) ist, in einer Formel dP₂ = dFₚ/Aᵥ₂, wobei die zweite virtuelle Fläche (Aᵥ₂) die virtuelle Fläche des mindestens einen Vorbelastung-Lagers (15) ist und die Vorbelastungsdruckschwankung (dP₂) die Betriebsdrucksschwankung des mindestens einen Vorbelastung-Lagers (15) ist,
- erste Antriebsmittel, die mit den Kolben (20) verbunden sind, um sie anzutreiben und ihnen eine Schwankung des Betriebsdrucks zuzuführen, die gleich der Druckschwankung der Kolben (dPₚ) ist,
- zweite Antriebsmittel, die mit dem Versorgungssystem (22) verbunden sind, um es anzutreiben, und dem Versorgungsdruck (P₀) eine Versorgungsdruckschwankung (dP₀) zuführen, um die Spalthöhe (h) des mindestens einen Vorbelastung-Lagers (15) infolge der Schwankung (dP₂) des Vorbelastungsdrucks konstant zu halten.

7. Der Teilehalter gemäß einem der obigen Ansprüche, **dadurch gekennzeichnet, dass** die zweiten Antriebsmittel mindestens einen Druck-Servo-Regler umfassen, der zwischen dem Versorgungssystem (22) und dem mindestens einen Vorbelastung-Lager (15) angeordnet ist, um die Versorgungsdruckschwankung (dP₀) des mindestens einen Vorbelastung-Lagers (15), der von dem Versorgungssystem (22) zugeführt wird, aufzuerlegen, um nach der Vorbelastungsdruckschwankung (dP₂) die Spalthöhe (h) konstant zu halten.

8. Der Teilehalter gemäß Anspruch 7, **dadurch gekennzeichnet, dass** die Berechnungsmittel und die Antriebsmittel nach einem Regelungszyklus arbeiten und zyklisch und automatisch Folgendes bestimmen;
- eine Überprüfung der funktionellen Anordnung des mindestens einen Traglagers (14),
- eine Neuanordnung des Teilehalters (10), wenn die Überprüfung eine Abweichung der funktionellen Anordnung des Traglagers (14) von der funktionellen Anordnung für optimalen Betrieb anzeigt.

9. Der Teilehalter gemäß einem der obigen Ansprüche, **dadurch gekennzeichnet, dass** die Berechnungsmittel in eine SPS integriert sind, die mit den Antriebsmitteln verbunden ist.

## Revendications

1. Porte-pièce pour des pièces à usiner avec des machines-outils, en particulier pour des pièces ayant une grande masse à usiner dans des tours verticaux, comprenant :
- une table porte-pièce (11) permettant de supporter une pièce (12),
- une semelle (13) permettant de supporter ladite table porte-pièce (11),
- au moins un palier de support hydrostatique (14) adapté pour supporter ladite table porte-pièce (11) sur ladite semelle (13),
- au moins un palier de précharge (15), qui est interposé entre ladite table porte-pièce (11) et ladite semelle (13), dans une configuration parallèle dynamique par rapport audit au moins un palier de support (14),
et **caractérisé par**
- des moyens (16) permettant de moduler une précharge communiquée audit au moins un palier de support (14),
- des moyens (17) permettant de détecter au moins un paramètre fonctionnel (A) d'au moins un coulisseau de support choisi (14a) dudit au moins un palier de support (14), et
- une unité centrale (18) permettant de commander lesdits moyens de modulation (16),
ladite unité de commande centrale (18) étant fonctionnellement connectée auxdits moyens de détection (17) de façon à recevoir d'eux, des estimations dudit au moins un paramètre fonctionnel (A), ladite unité de commande centrale (18) étant en outre fonctionnellement connectée auxdits moyens de modulation (16) de façon à les entraîner en fonction desdites estimations.

2. Porte-pièce selon la revendication 1, **caractérisé en ce que** ladite table porte-pièce (11) comprend un support (19) pour ledit au moins un palier de précharge (15), lesdits moyens de modulation (16) comprenant des pistons (20) permettant de pousser contre ledit au moins un palier de précharge (15), lesdits pistons (20) étant fonctionnellement connectés à ladite unité de commande centrale (18) afin d'être entraînés par celle-ci dans l'établissement de la poussée de précharge communiquée audit au moins un palier de support (14) au moyen dudit au moins un palier de précharge (15).

3. Porte-pièce selon l'une des revendications précédentes, **caractérisé en ce que** lesdits moyens de détection (17) comprennent au moins un transducteur de pression (21), qui est connecté audit au moins un coulisseau de support choisi (14a), ledit transducteur de pression (21) étant adapté pour estimer une pression d'écoulement (P₁), ladite pression d'écoulement (P₁) étant la pression de fonctionnement dudit au moins un coulisseau de support choisi (14a), ledit au moins un paramètre fonctionnel étant ladite pression d'écoulement (P₁).

4. Porte-pièce selon l'une des revendications précédentes, **caractérisé en ce que** ledit au moins un palier de précharge (15) est du type support hydrostatique.

5. Porte-pièce selon la revendication 4, **caractérisé en ce qu'**il comprend un système d'alimentation (22), qui est adapté pour l'alimentation hydraulique dudit au moins un palier de précharge (15) à une pression P₀, ladite unité de commande centrale (18) étant fonctionnellement connectée audit système d'alimentation (22) de façon à entraîner la pression d'alimentation (P₀) dudit au moins un palier de précharge (15), en accord avec l'entraînement simultané desdits pistons (20).

6. Porte-pièce selon l'une des revendications précédentes, **caractérisé en ce que** ladite unité de commande centrale (18) comprend
- des premiers moyens de calcul, qui sont adaptés pour calculer une variation de force de précharge (dFₚ), à appliquer audit au moins un palier de support (14) au moyen desdits pistons (20), ladite variation de force de précharge (dFₚ) étant égale au produit d'une première aire virtuelle (Aᵥ₁) et de la différence entre une pression d'écoulement optimale (Pₒₜₜ) et de ladite pression d'écoulement (P₁), c'est-à-dire dans la formule dFₚ = = Aᵥ₁·(Pₒₜₜ-P₁), ladite première aire virtuelle (Aᵥ₁) étant l'aire virtuelle dudit au moins un palier de support (14) et ladite pression d'écoulement optimale (Pₒₜₜ) étant la pression de fonctionnement dudit au moins un palier de support (14) dans l'état fonctionnel optimal,
- des deuxièmes moyens de calcul, qui sont adaptés pour calculer une variation de la pression des pistons (dPₚ), qui est égale au rapport qui est le résultat de la division de ladite variation de la force de précharge (dFₚ) par l'aire de la couronne des pistons (Aₚ), dans la formule dPₚ = dFₚ/Aₚ, ladite variation de pression de piston (dPₚ) étant la variation de pression de fonctionnement desdits pistons (20) qui est adaptée pour communiquer audit au moins un palier de support (14) ladite variation de force de précharge (dFₚ),
- des troisièmes moyens de calcul, qui sont adaptés pour calculer une variation de pression de précharge (dP₂), qui est égale au rapport qui est le résultat de la division de ladite variation de force de précharge (dFₚ) par une seconde aire virtuelle (Aᵥ₂), dans la formule dP₂ = dFₚ/Aᵥ₂, ladite seconde aire virtuelle (Aᵥ₂) étant l'aire virtuelle dudit au moins un palier de précharge (15) et ladite variation de pression de précharge (dP₂) étant la variation de pression de fonctionnement dudit au moins un palier de précharge (15),
- des premiers moyens d'entraînement, qui sont raccordés auxdits pistons (20) de façon à les entraîner, leur communiquant une variation de pression de fonctionnement qui est égale à ladite variation de pression des pistons (dPₚ),
- des seconds moyens d'entraînement, qui sont raccordés au système d'alimentation (22) de façon à l'entraîner, communiquant une variation de pression d'alimentation (dP₀) à la pression d'alimentation (P₀) de façon à maintenir constante la hauteur d'écartement (h) dudit au moins un palier de précharge (15) comme conséquence de ladite variation de pression de précharge (dP₂).

7. Porte-pièce selon l'une des revendications précédentes, **caractérisé en ce que** lesdits seconds moyens d'entraînement comprennent au moins un servorégulateur de pression qui est interposé entre ledit système d'alimentation (22) et ledit au moins un palier de précharge (15), de façon à communiquer ladite variation de pression d'alimentation (dP₀) dudit au moins un palier de précharge (15), fournie par ledit système d'alimentation (22), de façon à maintenir constante ladite hauteur d'écartement (h) en suivant ladite variation de pression de précharge (dP₂).

8. Porte-pièce selon la revendication 7, **caractérisé en ce que** lesdits moyens de calcul et lesdits moyens d'entraînement fonctionnent selon un cycle en boucle fermée, déterminant cycliquement et automatiquement
- une vérification de la configuration fonctionnelle dudit au moins un palier de support (14),
- une reconfiguration dudit porte-pièce (10) lorsque la vérification détermine une variation de la configuration fonctionnelle dudit palier de support (14) par rapport à la configuration fonctionnelle pour un fonctionnement optimal.

9. Porte-pièce selon l'une des revendications précédentes, **caractérisé en ce que** lesdits moyens de calcul sont intégrés dans un PLC connecté auxdits moyens d'entraînement.
